(19) **Europäisches Patentamt / European Patent Office / Office européen des brevets**

(11) **EP 3 872 647 A1**

(12) **EUROPEAN PATENT APPLICATION**

(43) Date of publication:
**01.09.2021 Bulletin 2021/35**

(51) Int Cl.:
**G06F 16/27** *(2019.01)*    **G06Q 10/06** *(2012.01)*

(21) Application number: **21153883.0**

(22) Date of filing: **27.01.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.02.2020   JP 2020032048**

(71) Applicant: **FUJITSU LIMITED Kanagawa 211-8588 (JP)**

(72) Inventor: **SHIMADA, Daichi Kawasaki-shi, Kanagawa 211-8588 (JP)**

(74) Representative: **Haseltine Lake Kempner LLP Cheapside House 138 Cheapside London EC2V 6BJ (GB)**

(54)    **OPTIMIZATION APPARATUS, OPTIMIZATION METHOD, AND OPTIMIZATION PROGRAM**

(57)    An information processing apparatus for allocating a plurality of items each having a first-attribute value and a second-attribute value to a plurality of places of allocation each having a maximum limit for the first attribute performs calculating an evaluation value for each of the plurality of items based on the first-attribute value and the second-attribute value, allocating as many unallocated items as possible in a descending order of evaluation values to a single place of allocation, selecting one or more items from the items allocated to the single place of allocation to create a replica, followed by adding replicas to the unallocated items, deleting replicas and the items for replica creation from the places of allocation, thereby fixing allocations with respect to items left without being deleted, and executing a metaheuristic algorithm to allocate items which are among the plurality of items and for which allocation has not been fixed.

## FIG.6

10 ITEM LIST

| | PACKED | WORTH | WEIGHT | EVALUATION VALUE |
|---|---|---|---|---|
| ITEM #1 | ✔ | 5 | 3 | 1.666667 |
| ITEM #2 | | 7 | 5 | 1.4 |
| ITEM #3 | ✔ | 6 | 3 | 2 |
| ITEM #4 | ✔ | 6 | 4 | 1.5 |
| ITEM #5 | | 4 | 5 | 0.8 |
| ITEM #6 | | 1 | 4 | 0.25 |
| ITEM #7 | | 3 | 6 | 0.5 |
| ITEM #8 | | 7 | 10 | 0.7 |
| ITEM #9 | ✔ | 7 | 2 | 3.5 |
| REPLICA OF ITEM #4 | | 6 | 4 | 1.5 |

KNAPSACK #1 (WEIGHT LIMIT: 13): ITEM #2 (struck through), ITEM #4, ITEM #1, ITEM #3, ITEM #9

KNAPSACK #2 (WEIGHT LIMIT: 15)

KNAPSACK #3 (WEIGHT LIMIT: 11)

EP 3 872 647 A1

Printed by Jouve, 75001 PARIS (FR)

**Description**

FIELD

The disclosures herein relate to an optimization apparatus, an optimization method, and an optimization program.

BACKGROUND

The multiple knapsack problem is a problem in combinatorial optimization. In the multiple knapsack problem, a plurality of items each having a given weight and a given value are packed into a plurality of knapsacks each having a weight capacity limit, such that the total weight is less than or equal to the limit. The solution of the multiple knapsack problem is obtained by finding the combination of knapsacks and items that maximizes the sum of values of items allocated to the plurality of knapsacks.

In combinatorial optimization problems, an increase in the number of dimensions of search space results in an explosive increase in the number of combinations of variables. In such a case, the use of exhaustive search, which calculates all possible combinations, requires lengthy computational time that is practically infeasible. Instead of finding the true optimum solution, thus, a general-purpose approximation algorithm (i.e., metaheuristic algorithm) based on a heuristic approach may be used, or an approximation algorithm that obtains a good approximate solution within a practically feasible computational time may be used.

A metaheuristic algorithm can obtain an optimum solution or a solution sufficiently close to the optimum solution, if given a sufficiently long computational time, through state transitions starting from an initial state to search for solutions attaining successively smaller values of an objective function. However, a solution that is sufficiently close to the optimum solution is not always readily obtained within a practically feasible computational time.

A greedy algorithm is one of the approximation algorithms that can obtain a good approximate solution within a feasible computational time. In the greedy algorithm, an evaluation value obtained by dividing a value by a weight, for example, is given to each item, and items are packed into knapsacks in a descending order of evaluation values. With this arrangement, a combination attaining a relatively large sum of evaluation values, among all the combinations of knapsacks and items, may be obtained at high speed. Precision of the solution, however, is lower than in the case of metaheuristic algorithms.

In order to obtain a solution sufficiently close to the optimum solution within a feasible computational time, it may be conceivable to use a greedy algorithm to fix allocations for some items first, and then to apply a metaheuristic algorithm with respect to the remaining items. In this case, the greedy algorithm can sufficiently reduce the size of the combinatorial optimization problem at a preprocessing stage prior to use of the metaheuristic algorithm, which may make it possible to obtain a high-quality solution within a feasible computational time.

In so doing, a high-quality solution close to the optimum solution should still be obtained even after allocations for some items are fixed by the greedy algorithm. In consideration of this, there is a need to fix suitable pairs only, among all the pairs each comprised of a knapsack and an item allocated thereto.

Accordingly, it may be desirable to select items suitable for fixed allocations when using a greedy algorithm to fix allocations for items prior to use of a metaheuristic algorithm in a multiple knapsack problem.

[Related-Art Documents]

[Patent Document]

[Patent Document 1] Japanese Laid-open Patent Publication No. 2019-046031
[Patent Document 2] Japanese Laid-open Patent Publication No. 2011-100303

SUMMARY

According to an aspect of the embodiment, an information processing apparatus for allocating a plurality of items each having a first-attribute value for a first attribute and a second-attribute value for a second attribute to a plurality of places of allocation each having a maximum limit for the first attribute such that a sum of first-attribute values is less than or equal to the maximum limit, such as to make as large as possible a sum of second-attribute values of items that have been allocated to the places of allocation, includes a memory and one or more arithmetic circuits coupled to the memory and configured to perform calculating an evaluation value for each of the plurality of items based on the first-attribute value and the second-attribute value, successively allocating as many unallocated items as possible in a descending order of evaluation values to a single place of allocation that has been selected from the places of allocation in a predetermined order, such that a sum of first-attribute values is less than or equal to the maximum limit, selecting one or more items from the items allocated to the single place of allocation in accordance with a predetermined selection rule based on at least one of the first-attribute value and the second-attribute value, to create a replica having a same evaluation value, a same first-attribute value, and a same second-attribute value as a respective one of the one or more selected items, followed by adding one or more created replicas to the unallocated items, deleting replicas and the items that have served as a basis for replica creation from the places of allocation after allocation of items inclusive of replicas comes to an end by repeating item allocation and replica addition, thereby fixing allocations to the places of allocation with respect to items left without being deleted, and executing a metaheuristic algorithm to allocate, to the places of allocation, items which are among the plurality of items and for which allocation to the places of allocation has not been fixed.

BRIEF DESCRIPTION OF DRAWINGS

Fig. 1 is a drawing illustrating a multiple knapsack problem;
Fig. 2 is a drawing illustrating an example of evaluation values;
Fig. 3 is a drawing illustrating the results of using a greedy algorithm to pack items illustrated in Fig. 2 into knapsacks illustrated in Fig. 1;
Fig. 4 is a drawing illustrating an example of the optimum solution;
Fig. 5 is a drawing illustrating an example of the process of fixing allocations for items according to an embodiment of an optimization method;
Fig. 6 is a drawing illustrating an example of the process of fixing allocations for items according to the embodiment of the optimization method;
Fig. 7 is a drawing illustrating an example of the process of fixing allocations for items according to the embodiment of the optimization method;
Fig. 8 is a drawing illustrating an example of the process of fixing allocations for items according to the embodiment of the optimization method;
Fig. 9 is a drawing illustrating an example of the configuration of an apparatus for executing the optimization method;
Fig. 10 is a drawing illustrating an example of the functional configuration of the optimization apparatus;
Fig. 11 is a flowchart illustrating the procedure of the optimization method according to a first embodiment;
Fig. 12 is a flowchart illustrating the procedure of the optimization method according to a

second embodiment; and

Fig. 13 is a drawing illustrating a variation of the knapsack problem.

DESCRIPTION OF EMBODIMENTS

In the following, embodiments of the invention will be described with reference to the accompanying drawings.

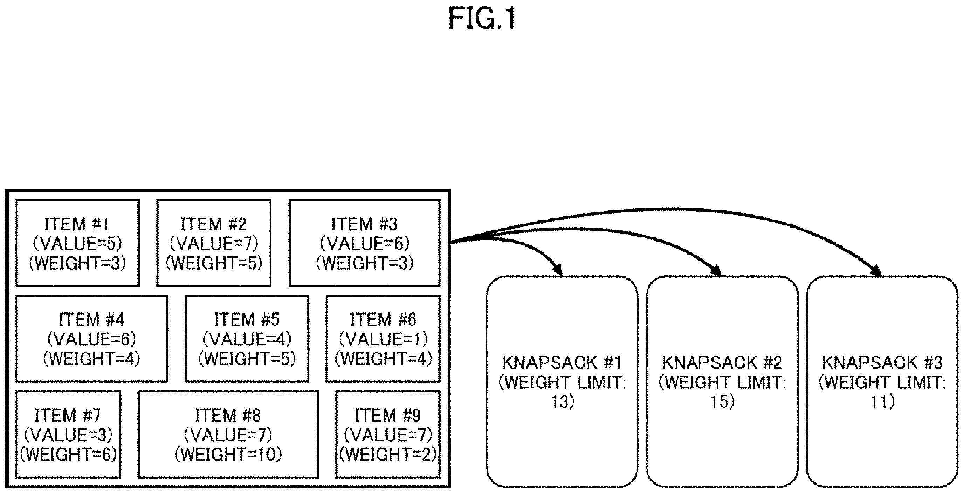

Fig. 1 is a drawing illustrating a multiple knapsack problem. In a multiple knapsack problem, a plurality of items each having a weight and a value and a plurality of knapsacks each having a maximum weight capacity limit are provided. In an example illustrated in Fig. 1, an item #1 has a value of 5 (e.g., 5 dollars) and a weight of 5 (e.g., 5 kg), for example. A knapsack #1, for example, has a maximum weight capacity limit of 13 (e.g., 13 kg), which defines the maximum limit of weights of items that are packed therein.
In the multiple knapsack problem illustrated in Fig. 1, as many items as possible, selected from the items #1 through #9, are packed into the knapsacks #1 through #3, without exceeding the maximum weight capacity limit of each of the knapsacks #1 through #3. The combination of knapsacks and items that maximizes the sum of values of items packed into the plurality of knapsacks #1 through #3 is the optimum solution of the multiple knapsack problem. The problem may be set such that all the given items can be packed into the plurality of knapsacks in the case of the optimum solution. As illustrated in Fig. 1, however, the problem may be differently set such that the sum of weights (i.e., 42) of the items #1 through #9 exceeds the sum of maximum weight capacity limits (i.e., 39) of the knapsacks #1 through #3. In this case, not all the items #1 through #9 are packed into the knapsacks #1 through #3 under the optimum solution, and some items are left without being packed.
In the greedy algorithm, an evaluation value obtained by dividing a value by a weight, for example, is given to each item, and the items are packed into the knapsacks in a descending order of evaluation values. In so doing, as many items as possible may be packed in a descending order of evaluation values into a single knapsack that has been selected from the plurality of knapsacks #1 through #3 in a predetermined order (e.g., in an ascending order of sequence numbers), for example. Upon this knapsack becoming full, a next knapsack may be selected according to the predetermined order, followed by packing items in the same manner.

The arrangement that packs items in a descending order of evaluation values each obtained by dividing a value by a weight enables items having higher values per unit weight to be packed preferentially. With this arrangement, more preferable items having higher cost performance with respect to the weight limit can be packed preferentially, so that a relatively good solution may be obtained.

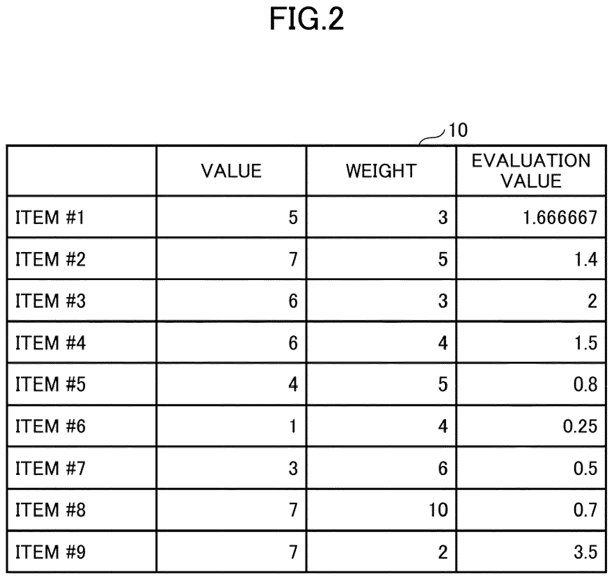

Fig. 2 is a drawing illustrating an example of evaluation values. Items #1 through #9 contained in an item list 10 illustrated in Fig. 2 are the same as the items #1 through #9 illustrated in Fig. 1. Evaluation values illustrated in Fig. 2 are obtained by dividing a value (i.e., worth) by a weight. The evaluation value is not limited to this example, and may alternatively be a value obtained by dividing the square of a value by a weight, for example. Still alternatively, the evaluation value may be a value obtained by subtracting a weight from a value, for example.

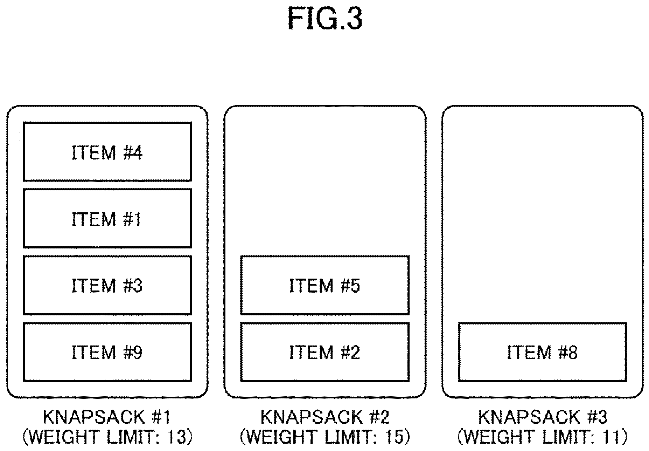

Fig. 3 is a drawing illustrating the results of using a greedy algorithm to pack the items illustrated in Fig. 2 into the knapsacks illustrated in Fig. 1. The items #1 through #9 illustrated in Fig. 2 are arranged in a descending order of evaluation values as follows: item #9, item #3, item #1, item #4, item #2, item #5, item #8, item #7, and item #6.

The first knapsack #1 to be packed can contain items up to a weight of 13 (kg). When items are selected in a descending order of evaluation values, the first four items #9, #3, #1, and #4 have a total weight of 12 (kg), so that these four items are packed into the knapsack #1. Similarly, the second knapsack #2 to be packed can contain items up to a weight of 15 (kg), and is thus packed with the fifth and sixth items in the descending order of evaluation values, i.e., the item #2 and the item #5 (having a total weight of 10 kg). The third knapsack #3 to be packed can contain items up to a weight of 11 (kg), and is thus packed with the seventh item in the descending order of evaluation values, i.e., the item #8 (having a weight of 10 kg). The eighth and ninth items in the descending order of evaluation values, i.e., the item #7 and the item #6, cannot be packed into the knapsacks according to the above-noted greedy algorithm.

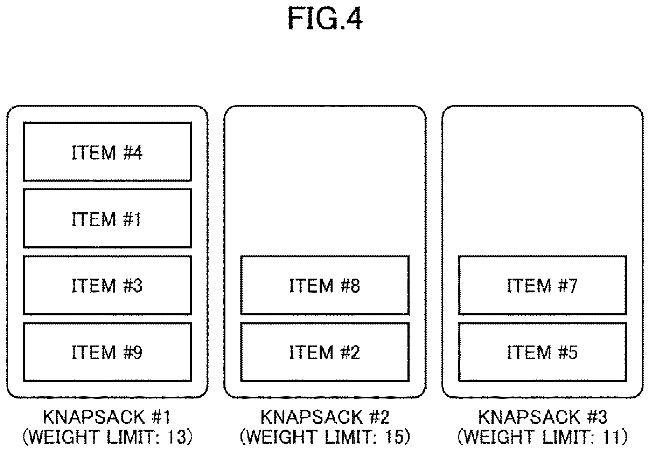

Fig. 4 is a drawing illustrating an example of the optimum solution. Under the solution illustrated in Fig. 4, the item #9, the item #3, the item #1, and the item #4 are packed into the knapsack #1, in the same manner as in the case of the greedy algorithm illustrated in Fig. 3. Items packed into the knapsack #2 and the knapsack #3 differ between the solution obtained by the greedy algorithm and the optimum solution. In the case of the optimum solution illustrated in Fig. 4, the knapsack #2 (with a maximum weight limit of 15 kg) is packed with the item #2 and the item #8 (with a total weight of 15 kg), and the knapsack #3 (with a maximum weight limit of 11 kg) is packed with the item #5 and the item #7 (with a total weight of 11 kg). The optimum solution is not limited to the solution of this example. For example, the arrangement obtained by transposing the two items #5 and #4 in Fig. 3 is still an optimum solution, and, also, the arrangement obtained by transposing the item #5 and the set of the items #9 and #3 in Fig. 3 is still an optimum solution.

As is understood from the example described above, packing items by use of a greedy algorithm results in a solution having lower quality than the optimum solution. In consideration of this, the optimization apparatus and the optimization method as will be described in the following use a greedy algorithm to pack some items, and then use a metaheuristic algorithm to determine allocations for the remaining items. Use of a metaheuristic algorithm after reducing the problem size with a greedy algorithm allows a high-quality solution to be obtained with a feasible computational time.

However, when the greedy algorithm fixes allocations for items, which one of the items are fixedly allocated will affect the quality of a final solution obtained by the metaheuristic algorithm. In the example illustrated in Fig. 3, for example, fixedly allocating the item #8 to the knapsack #3 results in the optimum solution of Fig. 4 being never obtained. On the other hand, fixedly allocating the item #9, the item #3, the item #1, the item #4, and the item #2, among the items illustrated in Fig. 3, still allows the optimum solution of Fig. 4 to be obtained.

In consideration of the above, it is preferable to refrain from fixing allocations with respect to the items that are selected from the items for which the greedy algorithm has determined allocations as illustrated in Fig. 3, and that are highly likely to have different allocations between the arrangement of the optimum solution and the arrangement obtained by the greedy algorithm. Conversely stated, allocations may be fixed with respect to the items that have a low likelihood of having different allocations between the arrangement of the optimum solution and the arrangement obtained by the greedy algorithm.

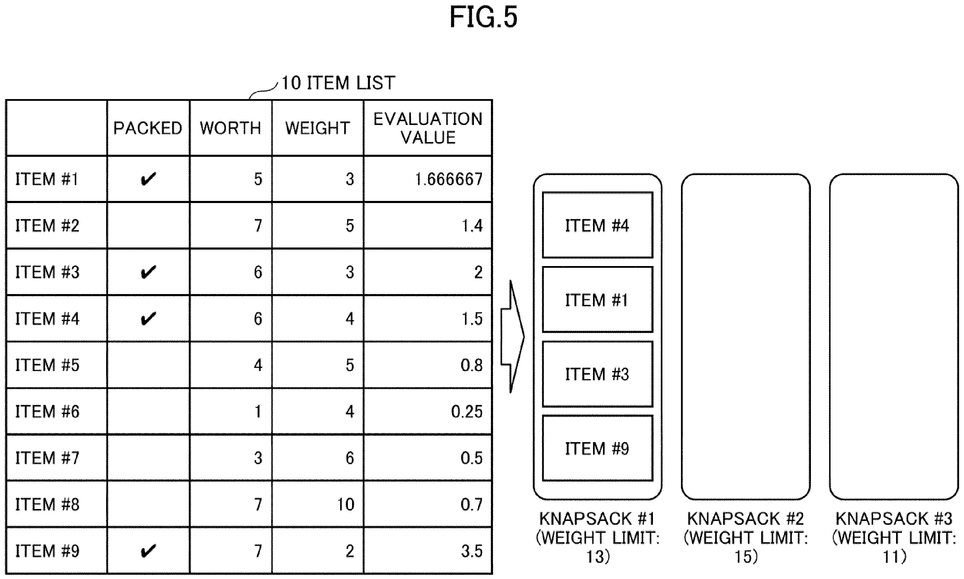

Fig. 5 through Fig. 8 are drawings illustrating an example of the process of fixing allocations for items according to an embodiment of the optimization method. The optimization method allocates a plurality of items each having a first-attribute value (e.g., weight value) for a first attribute (e.g., weight) and a second-attribute value (e.g., "worth" value) for a second attribute (e.g., worth) to a plurality of places of allocation (e.g., knapsacks) each having a maximum limit for the first attribute. In so doing, allocation is performed such that the sum of first-attribute values is less than or equal to the maximum limit. The object of the optimization method is to make as large as possible the sum of second-attribute values of the items that have been assigned to the places of allocation.

The optimization method first calculates an evaluation value based on a weight value and a worth value for each item. The item list 10 illustrated in Fig. 2 contains evaluation values calculated for the items #1 through #9. As was previously noted, the items #1 through #9 contained in the item list 10 are arranged in a descending order of evaluation values as follows: item #9, item #3, item #1, item #4, item #2, item #5, item #8, item #7, and item #6.

The optimization method successively allocates as many unallocated items as possible in a descending order of evaluation values to a single place of allocation that has been selected from the plurality of places of allocation (e.g., knapsacks #1 through #3) in a predetermined order, such that the sum of weights is less than or equal to the maximum limit. Fig. 5 illustrates the state in which four items, i.e., the item #9, the item #3, the item #1, and the item #4 (a total weight of which is 12 kg) are packed in the descending order of evaluation values into the first knapsack #1 to be packed (with a maximum limit of 13 kg). In the item list 10, the item #9, the item #3, the item #1, and the item #4, which have already been packed, are marked with a tick to indicate that these items have already been packed.

Subsequently, one or more items are selected from the items allocated to the single selected knapsack #1 in accordance with a selection rule based on at least one of a weight value and a worth value. Then, a replica having the same evaluation value, the same weight value, and the same worth value as a corresponding one of the one or more selected items is created, followed by adding the one or more created replicas to the unallocated items in the item list 10.

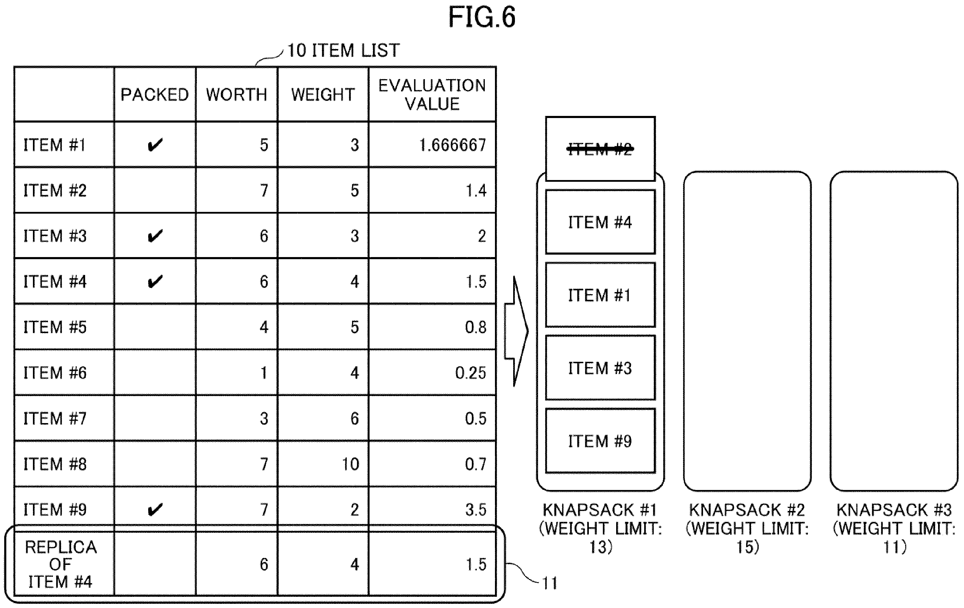

Fig. 6 illustrates the state in which a replica is created with respect to the item #4. An attempt to pack the item #2 into the knapsack #1 which have already been packed with the item #9, the item #3, the item #1, and the item #4 results in a failure to pack the item #2 because the weight of the item #2 is 6 (kg). This fact is indicated by strike-through that deletes the item #2 in Fig. 6. Namely, the result of allocating as many unallocated items as possible into the knapsack #1 in the descending order of evaluation values is the state in which the item #9, the item #3, the item #1, and the item #4 (a total weight of which is 12 kg) are packed. In this state, the item #4 that has the smallest evaluation value (= worth/weight) is selected in the example illustrated in Fig. 6, and, then, a replica having the same evaluation value, the same weight value, and the same worth value as the selected item #4 is created, followed by adding a created replica 11 of the item #4 to the item list 10.

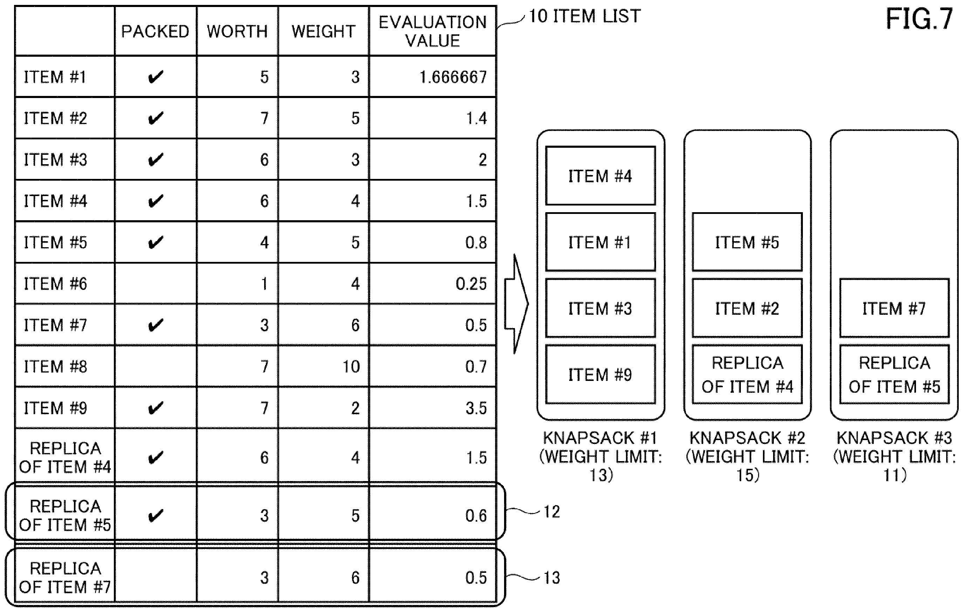

After this, the allocation step and the replica adding step described above are repeated as many times as needed, until the process of allocating items inclusive of replicas to all the places of allocation comes to an end. Fig. 7 illustrates the state in which the process of allocating items has come to an end. Similarly to the knapsack #1, which is the first place of allocation, the knapsack #2, which is the next place of allocation, is packed with as many unallocated items as possible that are successively fed in the descending order of evaluation values, followed by selecting the item #5 that has the smallest evaluation value among these allocated items. A replica 12 is created with respect to the selected item #5. This created replica 12 of the item #5 is then added to the item list 10. The created replicas 11 and 12, which are initially listed as unallocated items in the item list 10, are packed into the knapsack #2 and the knapsack #3, respectively, by the previously-noted allocation step.

The knapsack #3 is also packed with as many unallocated items as possible that are successively fed in the descending order of evaluation values, followed by selecting the item #7 that has the smallest evaluation value among these allocated items. A replica 13 is created with respect to the selected item #7. This created replica 13 of the item #7 is then added to the item list 10.

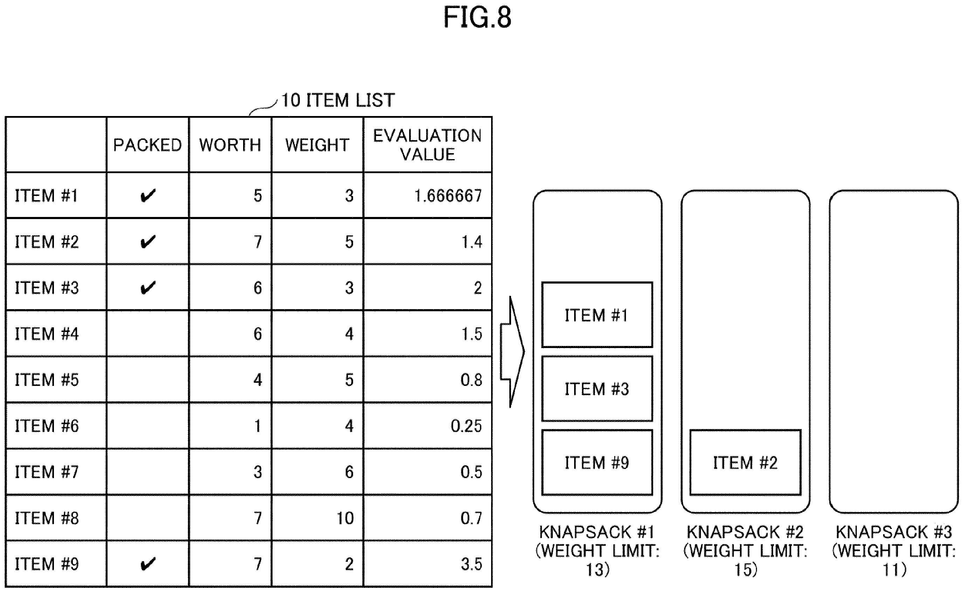

In the optimization method, the replicas and the items that have served as a basis for the replica creation are deleted from the places of allocation (i.e., the knapsacks #1 through #3) after the allocation step comes to an end. Then, allocations to the places of allocation (i.e., the knapsacks #1 through #3) are fixed with respect to the items left without being deleted. Fig. 8 illustrates the state in which item allocations are fixed.

As illustrated in Fig. 8, the state in which the item #9, the item #3, and the item #1 are packed into the knapsack #1 is fixed (i.e., finalized), and the state in which the item #2 is packed into the knapsack #2 is fixed (i.e., finalized). Namely, in the state illustrated in Fig. 7 obtained upon the completion of the allocation process, the item #4, the item #5, and the item #7 that have served as a basis for replica creation are deleted, and, also, the replicas of the item #4 and the item #5 are deleted. As a result of these deletions, only the item #9, the item #3, the item #1, and the item #2 are left in the knapsacks as the items that have fixedly been allocated to the places of allocation.

The optimization method then uses a metaheuristic algorithm to allocate, to the places of allocation (i.e., the knapsacks #1 through #3), the items for which allocation to the places of allocation has not been fixed, i.e., the items in the item list 10 which are not marked as having been allocated. More specifically, the item #4, the item #5, the item #6, the item #7, and the item #8 are allocated by a heuristic algorithm to the available space in the knapsacks #1 through #3. Namely, the item #4, the item #5, the item #6, the item #7, and the item #8 are allocated by a heuristic algorithm to the three knapsacks, i.e., the knapsacks #1 through #3 that are regarded as having the maximum weight capacity limits of 5 kg, 10 kg, and 11 kg, respectively.

Examples of metaheuristic algorithms include a random-walk search algorithm, a simulated annealing algorithm, a genetic algorithm, a stochastic evolutionary algorithm, and the like. These approximation algorithms are designed such that a probabilistic element is introduced into state transitions that are performed from an initial state, i.e., a start point, to search for solutions attaining successively improved values of an objective function, thereby allowing the state to converge on as satisfactory a solution as possible without being stuck in an unfavorable local minimum. In the case of a genetic algorithm, for example, the selection of pairs, crossover, selection, mutation, and the like are controlled in a probabilistic manner during the process in which the fitness of the population serving as an objective function value increases in successive generations, thereby avoiding getting stuck at an unfavorable local solution. In the case of a simulated annealing algorithm, for example, state transitions are controlled in a probabilistic manner so as to allow a given state transition to occur with a certain probability even when the value of an objective function worsens as a result of such a state transition, thereby avoiding getting stuck at an unfavorable local solution.

Examples of a mechanism for performing simulated annealing include an Ising machine (i.e., Boltzmann machine) using an Ising energy function. In an Ising machine, the problem to be solved is translated into an Ising model, which represents the behavior of spins of a magnetic material, and, then, a solution to the problem is calculated.

A knapsack problem may be formulated as an Ising problem as follows. The number of items is denoted as N, the number of knapsacks denoted as M, the worth of an item #i denoted as ci, the weight of the item #i denoted as $w_i$, and the maximum weight capacity limit of a knapsack #j denoted as $W_j$. Further, a variable $x_{ij}$ indicates whether the item #i is contained in the knapsack #j. The variable xij being 1 indicates that the item #i is contained in the knapsack #j, and the variable $x_{ij}$ being 0 indicates that the item #i is not contained in the knapsack #j, It may be noted that the knapsack problem is formulated herein by using a QUBO (quadratic unconstrained binary optimization) form in which variables assume either +1 or 0, rather than using an Ising model in which variables assume either +1 or - 1.

The objective function may be defined by an expression (1) as follows.

$$-\sum_{j=1}^{M}\sum_{i=1}^{N} c_i x_{ij} \qquad (1)$$

Further, an expression (2) and an expression (3) as follows may be used as constraints.

$$\sum_{i=1}^{N} w_i x_{ij} \leq W_j \ (j = 1,2,\ldots,M) \qquad (2)$$

$$\sum_{j=1}^{M} x_{ij} \leq 1 \ (i = 1,2,\ldots,N) \qquad (3)$$

The constraint expression (2) indicates that the total weight of items packed into each knapsack is less than or equal to the maximum weight capacity limit of the knapsack. The constraint expression (3) indicates that no item is selected two or more times.

In order for a simulated annealing algorithm to search for a solution, xij are subjected to probabilistic transitions to find xij that minimize the objective function defined by the expression (1) under the condition in which the constraint conditions (2) and (3) are satisfied. It may be noted that the constraint expressions (2) and (3) may be incorporated into the objective function. In doing so, auxiliary variables may be introduced in order to allow the act of minimizing the objective function to produce a solution that satisfies the constraint expressions. Specifically, the condition requiring that a value Z (e.g., $\Sigma w_i x_{ij}$) is less than or equal to K may be rewritten into the condition requiring that an expression (4) having an auxiliary variable $y_k$ shown below is minimized.

$$(1-\Sigma y_k)^2 + (\Sigma k y_k - Z)^2 \qquad (4)$$

The symbol "$\Sigma$" means obtaining the sum from k=1 to k=K. The first term in the expression (4) requires that only one of $y_1$ through $y_K$ is set to 1. The second term requires that a value of Z is set equal to the value of the subscript of the auxiliary variable that is one of $y_1$ through $y_K$ and that is set to 1. The value of the expression (4) is able to become zero when the value of Z is equal to one of the natural numbers from 1 to K. The value of the expression (4) is not able to become zero when the value of Z is greater than K. The optimization process that minimizes the original objective function while satisfying the constraint condition requiring $Z \leq K$ can be formulated as the process of minimizing a new objective function obtained by adding the expression (4) to the original objective function. Specifically, two expressions may be obtained by using each of the constraint expression (2) and the constraint expression (3) as the above-explained value of Z, and may be added to the expression (1). This arrangement allows the constraint conditions as defined by the constraint expressions (2) and (3) to be incorporated into the objective function that needs to be minimized.

In a simulated annealing algorithm, a state S may be defined as follows.

$$S=(x_{11}, x_{12}, \cdots, x_{1N}, x_{21}, x_{22}, \cdots, x_{2N}, \cdots, x_{M1}, x_{M2}, \cdots, x_{MN})$$

An objective function value E of the current state S is calculated, and, then, an objective function value E' of the next state S' obtained by making a slight change (e.g., 1 bit inversion) from the current state S is calculated, followed by calculating a difference ΔE (= E'-E) between these two states. In the case in which the Boltzmann distribution is used to represent the probability distribution of S and the Metropolis method is used, for example, probability P with which a transition to the next state S' occurs may be defined by the following formula.

$$P=min[1, \ exp(-\beta\Delta E)] \qquad (5)$$

Here, β is thermodynamic beta (i.e., the reciprocal of absolute temperature). The function min[1, x] assumes a value of 1 or a value of x, whichever is smaller. According to the above formula, a transition to the next state occurs with probability "1" in the case of ΔE≦0, and a transition to the next state occurs with probability exp (-βΔE) in the case of 0<ΔE.

Lowering temperature at a sufficiently slow rate, while performing state transitions, allows the state to be converged, theoretically, on an optimum solution having the smallest objective function value. The Metropolis method is a non-limiting example, and other transition control algorithms such as Gibbs sampling may alternatively be used.

In the optimization method of the present disclosures, the state of allocation in a place of allocation (e.g., knapsack) is fixed with respect to an item for which allocation has been fixed by the greedy algorithm as described in connection with Fig. 8, for example. A metaheuristic algorithm is then used to pack items for which allocation has not been fixed (i.e., the item #4, the item #5, the item #6, the item #7, and the item #8), into the knapsacks #1 through #3 such that optimal allocations are achieved. Namely, the combination of items and knapsacks is searched for such that the total worth of already allocated items becomes as large as possible while satisfying the constraint condition regarding the maximum weight capacity limits.

As described above, the optimization method according to the embodiment creates replicas of some items and allocates items inclusive of the replicas to the places of allocation during the execution of a greedy algorithm, The items for which replicas are created are one or more items that are selected from the items allocated to a single place of allocation for which allocation has been completed, and that are selected in accordance with a selection rule based on at least one of a weight value and a worth value. In the example described above, one item having the lowest evaluation value is selected. Alternatively, two or more items having the lowest evaluation values may be selected.

In the state illustrated in Fig. 7, the item #4 has the lowest evaluation value among the item #9, the item #3, the item #1, and the item #4 packed into the knapsack #1, and the probability that this item #4 will be stored in the knapsack #1 in the optimum solution is considered to be not so high. For example, the item #5, which has a relatively low worth but can fully utilize the maximum weight limit of the knapsack #1, may be packed into the knapsack #1 in place of the item #4. Such an arrangement may provide a solution closer to the optimum solution. In such a case, the item #4 may be packed into the next knapsack #2 rather than into the knapsack #1. In the optimization method of the embodiment, an item like the item #4 in the knapsack #1 may have a low degree of certainty in the sense that it is difficult to determine whether to pack the item into the knapsack #1 or into the next knapsack #2, and, thus, such an item is excluded from the items for which allocation is fixed.

Further, a replica is created for the item having a low degree of certainty, followed by treating both the original item and the replica as items to be packed into the knapsacks by the greedy algorithm. Both the original item and the replica are then removed from the knapsacks after the greedy algorithm has completed allocations. This arrangement allows a sufficient space (i.e., available weight capacity) usable for subsequent allocation of items with low degrees of certainty to be saved for a metaheuristic algorithm. Namely, the degree of freedom in selecting places of allocation during the execution of a metaheuristic algorithm is increased, thereby increasing the probability of achieving a solution close to the optimum solution.

The description of the embodiment has been directed to the case in which one or more replicas are created. Alternatively, a greedy algorithm may allocate items such as to secure a space (i.e., weight capacity) for allocating an item of a low degree of certainty in both the knapsack of an original allocation and the next knapsack. For example, in the state illustrated in Fig. 5, the item #4 may be moved from the knapsack #1 to the knapsack #2, and, thereafter, the remaining items may be allocated to the knapsack #2 and the one or more subsequent knapsacks. Alternatively, in the state illustrated in Fig. 5, a space for the item #4 having a weight of 4 kg may be removed from the total space of the knapsack #2 by tentatively setting the maximum weight capacity limit of the knapsack #2 to 11 kg (=15 kg - 4 kg), and, thereafter, the remaining items may be allocated. As exemplified above, a process equivalent to a process of explicitly creating a replica and packing the replica according to a greedy algorithm may be achieved in a variety of different manners by suitable data operations. In the present application, a phrase such as "create a replica and allocate the replica" is intended to refer to all data operations that achieve the same intended effect based on the principle of securing a replica space.

In the above-noted example, the item having the lowest evaluation value is selected as an item having a low degree of certainty. Alternatively, an item having a low degree of certainty may be selected based on other selection rules, depending on the circumstances. For example, a knapsack for which item allocation has been completed may contain one or more items having the lowest evaluation value, and also contain other items having evaluation values which are not much different from the lowest evaluation value. In such a case, the evaluation value may not be used as a selection criteria, and, instead, one or more items having the lightest weight may be selected as items having a low degree of certainty. This is because items having a light weight provide flexibility (i.e., greater freedom) in packing items into knapsacks, compared with items having a heavy weight. In some cases, it is believed to be preferable for such flexible items to be kept in an unfixed state, rather than to be fixedly allocated. Selecting one or more items having the lightest weight as items having a low degree of certainty can increase the probability that a solution obtained by the metaheuristic algorithm is closer to the optimum solution than otherwise.

Further, a weight threshold may be set for each knapsack when selecting one or more items. One or more items packed into a knapsack in excess of the threshold of the knapsack may then be selected as items having a low degree of certainty. This arrangement makes it possible to select items corresponding in number to the weight threshold of each knapsack, rather than selecting a predetermined specific number of items. For example, the knapsack #1 may have a threshold of 9 kg. In the state in which items are allocated as in Fig. 6, the item #4 that has been packed into the knapsack in excess of 9 kg may be selected as an item having a low degree of certainty. Setting a proper value as the threshold weight enables the number of items subjected to the metaheuristic algorithm to be adjusted to a proper number, thereby limiting the size of a combinatorial optimization problem to a proper size. The threshold weight may be set to a value obtained by dividing the total weight of all the items by the number of knapsacks, for example.

When selecting a predetermined number X of items as items having a low degree of certainty, the number X may be determined or learned based on past data or test data such as to facilitate the finding of an optimal solution. Alternatively, X is successively changed, followed by executing a metaheuristic algorithm to obtain solutions with respect to a plurality of cases in which respective, different numbers X are used. The best solution among the obtained solutions may then be presented to the user. These arrangements allow a solution to be obtained that is closer to the optimum solution then otherwise.

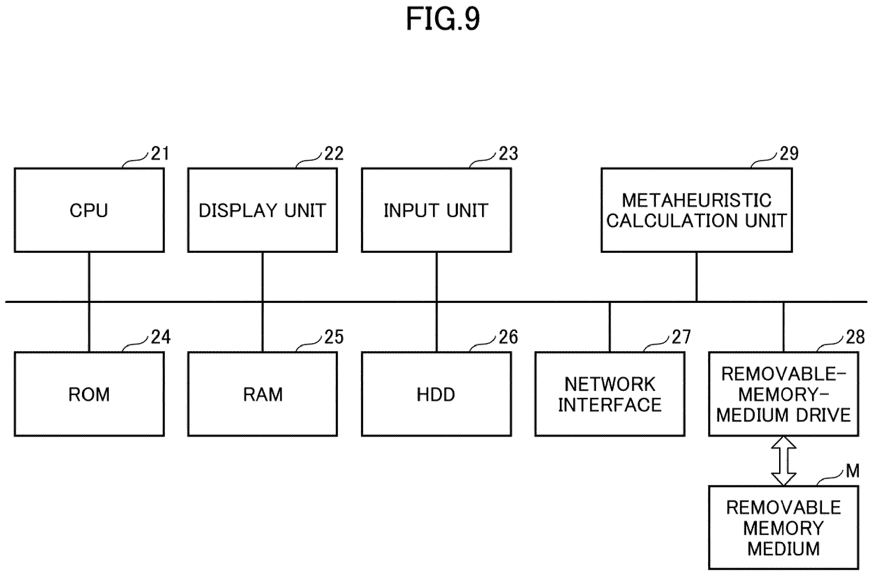

Fig. 9 is a drawing illustrating an example of the configuration of an information processing apparatus such as an optimization apparatus for executing the optimization method. The optimization apparatus illustrated in Fig. 1 includes a CPU 21, a display unit 22, an input unit 23, a ROM 24, a RAM 25, an HDD 26, a network interface 27, a removable-memory-medium drive 28, and a metaheuristic calculation unit 29. The CPU 21 and the metaheuristic calculation unit 29 are arithmetic circuits.

The input unit 23 provides user interface, and receives various commands for operating the optimization apparatus and user responses responding to data requests or the like. The display unit 22 displays the results of processing by the optimization apparatus, and further displays various data that make it possible for a user to communicate with the optimization apparatus. The network interface 27 is used to communicates with peripheral devices and with remote locations.

The optimization apparatus illustrated in Fig. 9 is a computer, and the optimization method is provided as a computer program executable by the optimization apparatus. This computer program is stored in a memory medium M that is mountable to the removable-memory-medium drive 28. The computer program is loaded to the RAM 25 or to the HDD 26 from the memory medium M through the removable-memory-medium drive 28. Alternatively, the computer program may be stored in a memory medium (not shown) provided in a peripheral apparatus or at a remote location, and is loaded to the RAM 25 or to the HDD 26 from the memory medium through the network interface 27.

Upon receiving user instruction for program execution from the input unit 23, the CPU 21 loads the program to the RAM 25 from the memory medium M, the peripheral apparatus, the remote memory medium, or the HDD 26. The CPU 21 executes the program loaded to the RAM 25 by use of an available memory space of the RAM 25 as a work area, and continues processing while communicating with the user as such a need arises. The ROM 24 stores control programs for the purpose of controlling basic operations of the CPU 48 or the like.

By executing the computer program as described above, the optimization apparatus performs the greedy-algorithm-based allocation process. The metaheuristic calculation unit 29 may be a dedicated hardware specifically designed to execute a metaheuristic algorithm, and may be a dedicated hardware that performs simulated annealing to search for a solution of an Ising problem. In an alternative configuration, the metaheuristic calculation unit 29 may not be provided. In such a case, the CPU 21, which is the processor of the general-purpose computer, functions as a metaheuristic calculation unit to perform a metaheuristic algorithm.

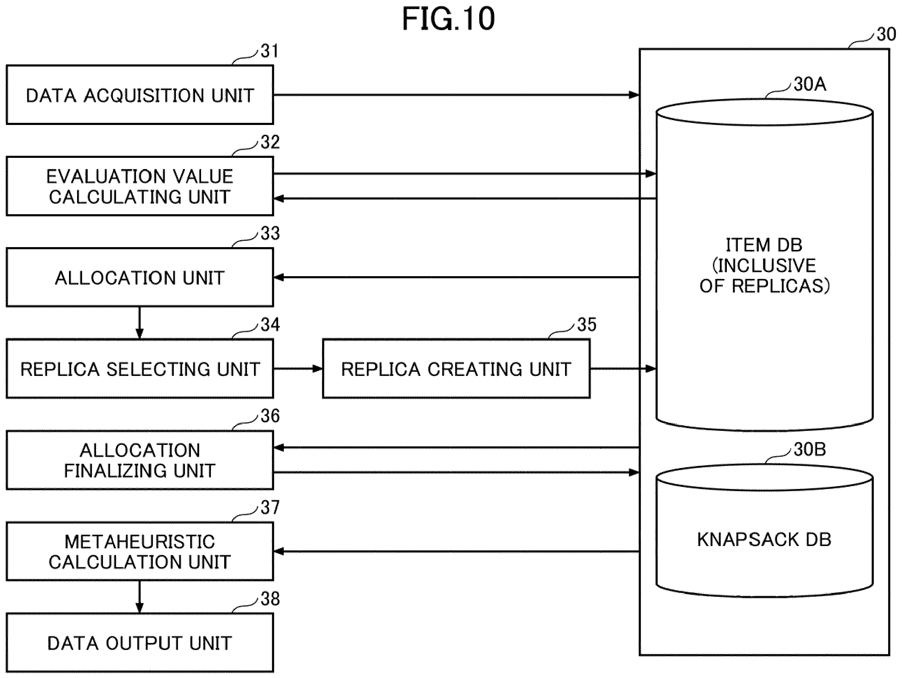

Fig. 10 is a drawing illustrating an example of the functional configuration of the optimization apparatus. The optimization apparatus illustrated in Fig. 10 includes a data storage unit 30, a data acquisition unit 31, an evaluation value calculating unit 32, an allocation unit 33, a replica selecting unit 34, a replica creating unit 35, an allocation finalizing unit 36, a metaheuristic calculation unit 37, and a data output unit 38. The data storage unit 30 has stored therein an item database (i.e., item DB) 30A and a knapsack database (i.e., knapsack DB) 30B. The functional units other than the data storage unit 30 and the metaheuristic calculation unit 37 may be implemented by the CPU 21 illustrated in Fig. 9. The function of the data storage unit 30 may be implemented by the RAM 25 or the HDD 26 illustrated in Fig. 9. The function of the metaheuristic calculation unit 37 may be implemented by the CPU 21 or the metaheuristic calculation unit 29 illustrated in Fig. 9.

It may be noted that boundaries between functional blocks illustrated as boxes indicate functional boundaries, and may not necessarily correspond to boundaries between program modules or separation in terms of control logic. One functional block and another functional block may be combined into one functional block that functions as one block. One functional block may be divided into a plurality of functional blocks that operate in coordination.

The data acquisition unit 31 stores, in the item database 30A and the knapsack database 30B, item data and knapsack data that are supplied from an external source to define a multiple knapsack problem. The evaluation value calculating unit 32 calculates an evaluation value for each item based on a first-attribute value (e.g., weight value) and a second-attribute value (e.g., worth value).

The allocation unit 33 successively allocates as many unallocated items as possible in a descending order of evaluation values to a single place of allocation that has been selected from the plurality of places of allocation (e.g., knapsacks) in a predetermined order, such that the sum of first-attribute values is less than or equal to the maximum limit. The replica selecting unit 34 may select one or more items from the items allocated to the single selected place of allocation (e.g., knapsack) in accordance with a predetermined selection rule based on at least one of a first-attribute value (e.g., weight value) and a second-attribute value (e.g., worth value). The replica creating unit 35 creates a replica having the same evaluation value, the same first-attribute value (e.g., weight value), and the same second-attribute value (e.g., worth value) as a respective one of the one or more selected items, followed by adding the one or more created replicas to the unallocated items in the item database 30A (e.g., the item list 10 previously described).

The allocation finalizing unit 36 deletes the replicas and the items that have served as a basis for replica creation from the places of allocation (e.g., knapsacks) after the allocation of items inclusive of replicas comes to an end, thereby fixing allocations to the places of allocation with respect to the items left without being deleted.

The metaheuristic calculation unit 37 uses a metaheuristic algorithm to allocate, to the places of allocation (e.g., knapsacks), the items which are among the plurality of items defined in the problem and for which allocation to the places of allocation has not been fixed. In so doing, the items to be allocated do not include replicas. It is not always the case that all of the plurality of items can be allocated to the places of allocation (knapsacks). The data output unit 38 outputs a solution (i.e., data indicative of a finally obtained combination of items and the places of allocation) obtained by the metaheuristic calculation unit 37. The output data may be supplied to a display screen via the display unit 22, to the HDD 26, to the memory medium M via the removable-memory-medium drive 28, or to an external device via the network interface 27.

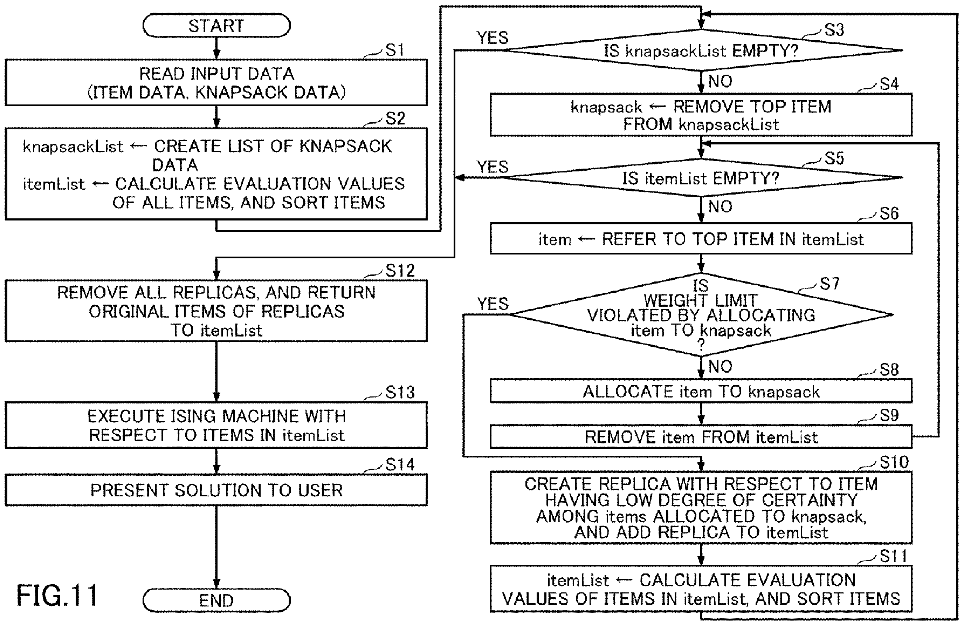

Fig. 11 is a flowchart illustrating the procedure of the optimization method according to a first embodiment. It may be noted that, in Fig. 11 and the subsequent flowcharts, an order in which the steps illustrated in the flowchart are performed is only an example. The scope of the disclosed technology is not limited to the disclosed order. For example, a description may explain that an A step is performed before a B step is performed. Despite such a description, it may be physically and logically possible to perform the B step before the A step while it is possible to perform the A step before the B step. In such a case, all the consequences that affect the outcomes of the flowchart may be the same regardless of which step is performed first. It then follows that, for the purposes of the disclosed technology, it is apparent that the B step can be performed before the A step is performed. Despite the explanation that the A step is performed before the B step, such a description is not intended to place the obvious case as described above outside the scope of the disclosed technology. Such an obvious case inevitably falls within the scope of the technology intended by this disclosure.

In step S1, the input unit 23 receives input data. The input data are information regarding items and information regarding knapsacks.

In step S2, the CPU 21 makes a list from the information regarding the plurality of knapsacks to store the list in a stack "knapsackList", and calculates an evaluation value for each of the items to store in an item list "itemList" the items which are arranged in the descending order of evaluation values. In the stack "knapsackList", the knapsacks are arranged in a predetermined order (e.g., in the ascending order of sequence numbers).

In step S3, the CPU 21 checks whether the stack "knapsackList" is empty. If the stack is not empty, the procedure proceeds to step S4.

In step S4, the CPU 21 removes the top item from the stack "knapsackList", and assigns the removed knapsack as the place-of-allocation "knapsack". In step S5, the CPU 21 checks whether the item list "itemList" is empty. If the item list is not empty, the procedure proceeds to step S6.

In step S6, the CPU 21 assigns the top item in the item list "itemList" as the allocation item "item". Namely, the top item in the list in which a plurality of items are arranged in the descending order of evaluation values is assigned as the allocation item "item".

In step S7, the CPU 21 checks whether allocating the allocation item "item" to the place-of-allocation "knapsack" results in the weight limit (i.e., the maximum weight capacity limit) being violated. If violation does not occur, the procedure proceeds to step S8.

In step S8, the CPU 21 assigns (i.e., allocates) the allocation item "item" to the place-of-allocation "knapsack". Namely, the item identified by the allocation item "item" is packed into the knapsack identified by the place-of-allocation "knapsack".

In step S9, the CPU 21 removes (i.e., deletes), from the item list "itemList", the item that has been allocated in step S8. Thereafter, the procedure returns to step S5, from which the subsequent steps are repeated.

If the check in step S7 finds that the weight limit is violated, the CPU 21 in step S10 creates a replica of one or more items having a low degree of certainty among the items having been allocated to the place-of-allocation "knapsack", followed by adding the one or more created replicas to the item list "itemList". In step S11, the CPU 21 calculates evaluation values with respect to the items (including replicas) in the item list "itemList" as needed, followed by arranging the items including the replicas in the descending order of evaluation values in the item list "itemList". Thereafter, the procedure returns to step S3, from which the subsequent steps are repeated.

If the check in step S3 finds that the stack "knapsackList" is empty, the CPU 21 in step S12 removes all the replicas from the knapsacks for which allocation has been completed, and returns all the items serving as a basis for the replicas to the item list "itemList". The items having remained in the knapsacks are the items which are fixedly allocated (i.e., fixed).

In step S13, the metaheuristic calculation unit 29 (i.e., Ising machine) performs simulated annealing with respect to the items in the item list "itemList". Alternatively, the CPU 21 may perform simulated annealing with respect to the items in the item list "itemList".

In step S14, the CPU21 presents the solution obtained by the simulated annealing to the user via a specified medium (e.g., a display screen or a memory medium). With this, the execution of the optimization method comes to an end.

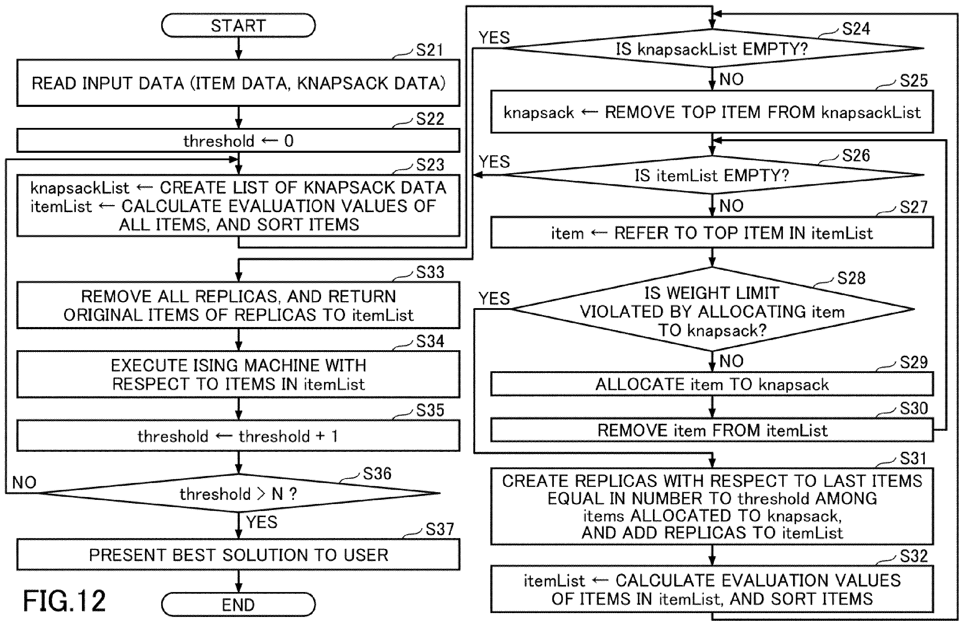

Fig. 12 is a flowchart illustrating the procedure of the optimization method according to a second embodiment.

In step S21, the input unit 23 receives input data. The input data are information regarding items and information regarding knapsacks.

In step S22, the CPU 21 sets a threshold value "threshold" to its initial value "0". Subsequent steps S23 through S30 are identical to steps S2 through S9 illustrated in Fig. 11, respectively. It may be noted, however, that in the flowchart illustrated in Fig. 12, the procedure proceeds from S28 to step S31 if the check in step S28 finds that the weight limit is violated.

In step S31, the CPU 21 creates a replica with respect to a number "threshold" of items which are last allocated among the items allocated to the place-of-allocation "knapsack" (i.e., a number "threshold" of items having the lowest evaluation values), followed by adding the created replicas to the item list "itemList". Steps S32 through S34 are identical to steps S11 through S13 illustrated in Fig. 11, respectively.

After simulated annealing is performed in step S34, the CPU 21 in step S35 increases the threshold value "threshold" by 1. In step S36, the CPU 21 checks whether the threshold value "threshold" is greater than a predetermined number N that has been set in advance. In the case of the threshold value "threshold" being no greater than the predetermined number N, the procedure goes back to step S23 to repeat the execution of the subsequent steps.

If the check in steps S36 finds that the threshold value "threshold" is greater than the predetermined number N, the CPU21 presents the best solution among the solutions obtained by the simulated annealing to the user via a specified medium (e.g., a display screen or a memory medium). With this, the execution of the optimization method comes to an end.

In the second embodiment of the optimization method described above, the predetermined number N is set in advance, and an allocation process by the greedy algorithm and a solution search by the metaheuristic algorithm are performed when the threshold value "threshold" is no greater than N. Upon the threshold value "threshold" becoming greater than N, the procedure comes to an end to present the best solution. Instead of utilizing such a predetermined number N, a different check criterion may be utilized to put an end to an allocation process by the greedy algorithm and a solution search by the metaheuristic algorithm. For example, the check in step S36 may check whether the number of knapsacks that contain one or more fixed items upon the completion of an allocation process by the greedy algorithm is less than or equal to one. Upon finding that the number is less than or equal to one, the procedure may come to an end to present the best solution. In this arrangement, a solution search by the metaheuristic algorithm continues to be performed until the number of fixed items allocated by the greedy algorithm becomes close to the minimum possible number. The probability of obtaining the optimum solution is thus increased. Further, without setting the predetermined number N in advance, the condition under which the procedure comes to an end is automatically set in accordance with the size and aspect of the problem. As a result, a solution close to the optimum solution can be obtained in an adaptive manner in accordance with the size and aspect of the problem.

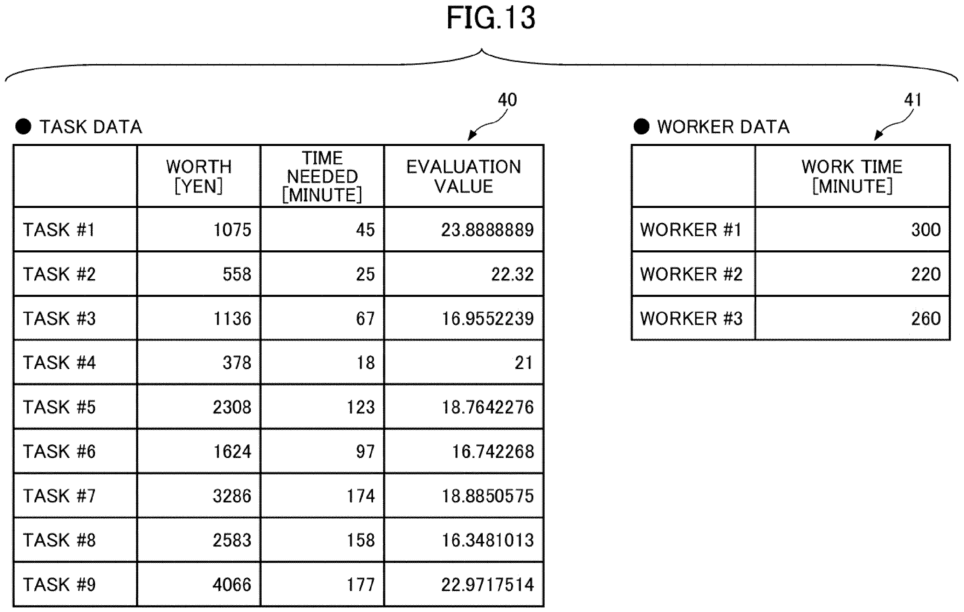

Fig. 13 is a drawing illustrating a variation of the knapsack problem. A multiple knapsack problem regarded as a combinatorial optimization problem may appear under different problem settings than the problem settings comprised of items and knapsacks. An example illustrated in Fig. 13 is directed to a problem in which tasks are allocated to a plurality of workers.

In this example, a plurality of objects (i.e., tasks) are defined, each of which has a first-attribute value (i.e., the time needed for the task) for a first attribute (i.e., the amount of the task) and a second-attribute value (i.e., payment for the task) for a second attribute (i.e., the worth of the task). In the example illustrated in Fig. 13, the task #1, for example, contained in a task list 40 requires 45 minutes to complete, and completing this task produces a worth of 1075 yen (e.g., may be rewarded with a payment of 1075 yen).

Further, the tasks are allocated to the places of allocation (i.e., workers) each having the maximum limit for the first attribute (i.e., maximum work time limit) such that the sum of the first-attribute values (i.e., the sum of the time needed for the tasks) is less than or equal to the maximum limit (i.e., maximum work time limit). In the example illustrated in Fig. 13, the worker #1, for example, contained in a worker list 41 has a maximum work time limit of 300 minutes. Accordingly, the task #9 (for which the time need is 177 minutes) and the task #5 (for which the time needed is 123 minutes) can both be allocated to the worker #1.

In this problem, it is required to find a combination of workers and tasks that makes as large as possible the sum of second-attribute values (i.e., payments for tasks) associated with the objects (i.e., tasks) that have been allocated to the places of allocation (i.e., the workers). In finding the solution of the problem, a greedy algorithm may employ an evaluation value obtained by dividing the payment illustrated in the task list 40 by the time needed for the task.

As described above, a combinatorial optimization problem equivalent to a multiple knapsack problem exists under different problem settings than the problem settings comprised of items and knapsacks. The optimization apparatus and the optimization method of the present disclosures are applicable to such a combinatorial optimization problem that is equivalent to a multiple knapsack problem.

Further, although the present invention has been described with reference to the embodiments, the present invention is not limited to these embodiments, and various variations and modifications may be made without departing from the scope as defined in the claims.

According to at least one embodiment, items suitable for fixed allocations can be selected when using a greedy algorithm to fix allocations for items prior to use of a metaheuristic algorithm in a multiple knapsack problem.

**Claims**

1. An information processing apparatus for allocating a plurality of items each having a first-attribute value for a first attribute and a second-attribute value for a second attribute to a plurality of places of allocation each having a maximum limit for the first attribute such that a sum of first-attribute values is less than or equal to the maximum limit, such as to make as large as possible a sum of second-attribute values of items that have been allocated to the places of allocation, comprising:

   an evaluation value calculating unit configured to calculate an evaluation value for each of the plurality of items based on the first-attribute value and the second-attribute value;
   an allocation unit configured to successively allocate as many unallocated items as possible in a descending order of evaluation values to a single place of allocation that has been selected from the places of allocation in a predetermined order, such that a sum of first-attribute values is less than or equal to the maximum limit;
   a replica creating unit configured to select one or more items from the items allocated to the single place of allocation in accordance with a predetermined selection rule based on at least one of the first-attribute value and the second-attribute value, to create a replica having a same evaluation value, a same first-attribute value, and a same second-attribute value as a respective one of the one or more selected items, and to add one or more created replicas to the unallocated items;
   an allocation finalizing unit configured to delete replicas and the items that have served as a basis for replica creation from the places of allocation after allocation of items inclusive of replicas comes to an end by repeating item allocation by the allocation unit and replica addition by the replica creating unit, and to fix allocations to the places of allocation with respect to items left without being deleted; and
   a metaheuristic calculation unit configured to execute a metaheuristic algorithm to allocate, to the places of allocation, items which are among the plurality of items and for which allocation to the places of allocation has not been fixed.

2. The information processing apparatus as claimed in claim 1, wherein the one or more items selected by the replica creating unit from the items allocated to the single place of allocation are one or more items having one or more smallest evaluation values among the items allocated to the single place of allocation.

3. The information processing apparatus as claimed in claim 1, wherein the one or more items selected by the replica creating unit from the items allocated to the single place of allocation are one or more items having one or more smallest first-attribute values among the items allocated to the single place of allocation.

4. The information processing apparatus as claimed in claim 1, wherein the one or more items selected by the replica creating unit from the items allocated to the single place of allocation are one or more items allocated in excess of a predetermined threshold set for the first attribute among the items allocated to the single place of allocation.

5. The information processing apparatus as claimed in any one of claims 1 to 3, wherein a number of the one or more items selected by the replica creating unit from the items allocated to the single place of allocation is changed, so that the metaheuristic calculation unit calculates solutions for respective cases in which respective, different numbers of items have served as a basis for replica creation, and a best solution is selected from the solutions for output.

6. The information processing apparatus as claimed in any one of claims 1 to 5, wherein the evaluation value is obtained by dividing the second-attribute value by the first-attribute value.

7. An information processing method for allocating a plurality of items each having a first-attribute value for a first attribute and a second-attribute value for a second attribute to a plurality of places of allocation each having a maximum limit for the first attribute such that a sum of first-attribute values is less than or equal to the maximum limit, such as to make as large as possible a sum of second-attribute values of items that have been allocated to the places of allocation, comprising:

   calculating an evaluation value for each of the plurality of items based on the first-attribute value and the second-attribute value;
   successively allocating as many unallocated items as possible in a descending order of evaluation values to a single place of allocation that has been selected from the places of allocation in a predetermined order, such that a sum of first-attribute values is less than or equal to the maximum limit;
   selecting one or more items from the items allocated to the single place of allocation in accordance with a predetermined selection rule based on at least one of the first-attribute value and the second-attribute value, to create a replica having a same evaluation value, a same first-attribute value, and a same second-attribute value as a respective one of the one or more selected items, followed by adding one or more created replicas to the unallocated items;
   deleting replicas and the items that have served as a basis for replica creation from the places of allocation after allocation of items inclusive of replicas comes to an end by repeating item allocation and replica addition, thereby fixing allocations to the places of allocation with respect to items left without being deleted; and
   executing a metaheuristic algorithm to allocate, to the places of allocation, items which are among the plurality of items and for which allocation to the places of allocation has not been fixed.

8. A computer program for allocating a plurality of items each having a first-attribute value for a first attribute and a second-attribute value for a second attribute to a plurality of places of allocation each having a maximum limit for the first attribute such that a sum of first-attribute values is less than or equal to the maximum limit, such as to make as large as possible a sum of second-attribute values of items that have been allocated to the places of allocation, the computer program comprising instructions which, when the program is executed by a computer, cause the computer to perform:

   calculating an evaluation value for each of the plurality of items based on the first-attribute value and the second-attribute value;
   successively allocating as many unallocated items as possible in a descending order of evaluation values to a single place of allocation that has been selected from the places of allocation in a predetermined order, such that a sum of first-attribute values is less than or equal to the maximum limit;
   selecting one or more items from the items allocated to the single place of allocation in accordance with a predetermined selection rule based on at least one of the first-attribute value and the second-attribute value, to create a replica having a same evaluation value, a same first-attribute value, and a same second-attribute value as a respective one of the one or more selected items, followed by adding one or more created replicas to the unallocated items;
   deleting replicas and the items that have served as a basis for replica creation from the places of allocation after allocation of items inclusive of replicas comes to an end by repeating item allocation and replica addition, thereby fixing allocations to the places of allocation with respect to items left without being deleted; and executing a metaheuristic algorithm to allocate, to the places of allocation, items which are among the plurality of items and for which allocation to the places of allocation has not been fixed.

# FIG.1

EP 3 872 647 A1

| ITEM #1 (VALUE=5) (WEIGHT=3) | ITEM #2 (VALUE=7) (WEIGHT=5) | ITEM #3 (VALUE=6) (WEIGHT=3) |
|---|---|---|
| ITEM #4 (VALUE=6) (WEIGHT=4) | ITEM #5 (VALUE=4) (WEIGHT=5) | ITEM #6 (VALUE=1) (WEIGHT=4) |
| ITEM #7 (VALUE=3) (WEIGHT=6) | ITEM #8 (VALUE=7) (WEIGHT=10) | ITEM #9 (VALUE=7) (WEIGHT=2) |

KNAPSACK #1 (WEIGHT LIMIT: 13)

KNAPSACK #2 (WEIGHT LIMIT: 15)

KNAPSACK #3 (WEIGHT LIMIT: 11)

# FIG.2

|  | VALUE | WEIGHT | EVALUATION VALUE |
|---|---|---|---|
| ITEM #1 | 5 | 3 | 1.666667 |
| ITEM #2 | 7 | 5 | 1.4 |
| ITEM #3 | 6 | 3 | 2 |
| ITEM #4 | 6 | 4 | 1.5 |
| ITEM #5 | 4 | 5 | 0.8 |
| ITEM #6 | 1 | 4 | 0.25 |
| ITEM #7 | 3 | 6 | 0.5 |
| ITEM #8 | 7 | 10 | 0.7 |
| ITEM #9 | 7 | 2 | 3.5 |

# FIG.3

| KNAPSACK #1<br>(WEIGHT LIMIT: 13) | KNAPSACK #2<br>(WEIGHT LIMIT: 15) | KNAPSACK #3<br>(WEIGHT LIMIT: 11) |
|---|---|---|
| ITEM #4 | | |
| ITEM #1 | | |
| ITEM #3 | ITEM #5 | |
| ITEM #9 | ITEM #2 | ITEM #8 |

# FIG.4

| KNAPSACK #1 (WEIGHT LIMIT: 13) | KNAPSACK #2 (WEIGHT LIMIT: 15) | KNAPSACK #3 (WEIGHT LIMIT: 11) |

ITEM #4
ITEM #1
ITEM #3
ITEM #9

ITEM #8
ITEM #2

ITEM #7
ITEM #5

KNAPSACK #1
(WEIGHT LIMIT: 13)　　　KNAPSACK #2
(WEIGHT LIMIT: 15)　　　KNAPSACK #3
(WEIGHT LIMIT: 11)

## FIG.5

10 ITEM LIST

|  | PACKED | WORTH | WEIGHT | EVALUATION VALUE |
|---|---|---|---|---|
| ITEM #1 | ✔ | 5 | 3 | 1.666667 |
| ITEM #2 |  | 7 | 5 | 1.4 |
| ITEM #3 | ✔ | 6 | 3 | 2 |
| ITEM #4 | ✔ | 6 | 4 | 1.5 |
| ITEM #5 |  | 4 | 5 | 0.8 |
| ITEM #6 |  | 1 | 4 | 0.25 |
| ITEM #7 |  | 3 | 6 | 0.5 |
| ITEM #8 |  | 7 | 10 | 0.7 |
| ITEM #9 | ✔ | 7 | 2 | 3.5 |

ITEM #4
ITEM #1
ITEM #3
ITEM #9

KNAPSACK #1
(WEIGHT LIMIT: 13)

KNAPSACK #2
(WEIGHT LIMIT: 15)

KNAPSACK #3
(WEIGHT LIMIT: 11)

EP 3 872 647 A1

## FIG.6

10 ITEM LIST

| | PACKED | WORTH | WEIGHT | EVALUATION VALUE |
|---|---|---|---|---|
| ITEM #1 | ✔ | 5 | 3 | 1.666667 |
| ITEM #2 | | 7 | 5 | 1.4 |
| ITEM #3 | ✔ | 6 | 3 | 2 |
| ITEM #4 | ✔ | 6 | 4 | 1.5 |
| ITEM #5 | | 4 | 5 | 0.8 |
| ITEM #6 | | 1 | 4 | 0.25 |
| ITEM #7 | | 3 | 6 | 0.5 |
| ITEM #8 | | 7 | 10 | 0.7 |
| ITEM #9 | ✔ | 7 | 2 | 3.5 |
| REPLICA OF ITEM #4 | | 6 | 4 | 1.5 |

11

~~ITEM #2~~
ITEM #4
ITEM #1
ITEM #3
ITEM #9

KNAPSACK #1 (WEIGHT LIMIT: 13)

KNAPSACK #2 (WEIGHT LIMIT: 15)

KNAPSACK #3 (WEIGHT LIMIT: 11)

EP 3 872 647 A1

FIG.7

| | PACKED | WORTH | WEIGHT | EVALUATION VALUE |
|---|---|---|---|---|
| ITEM #1 | ✔ | 5 | 3 | 1.666667 |
| ITEM #2 | ✔ | 7 | 5 | 1.4 |
| ITEM #3 | ✔ | 6 | 3 | 2 |
| ITEM #4 | ✔ | 6 | 4 | 1.5 |
| ITEM #5 | ✔ | 4 | 5 | 0.8 |
| ITEM #6 | | 1 | 4 | 0.25 |
| ITEM #7 | ✔ | 3 | 6 | 0.5 |
| ITEM #8 | | 7 | 10 | 0.7 |
| ITEM #9 | ✔ | 7 | 2 | 3.5 |
| REPLICA OF ITEM #4 | ✔ | 6 | 4 | 1.5 |
| REPLICA OF ITEM #5 | ✔ | 3 | 5 | 0.6 |
| REPLICA OF ITEM #7 | | 3 | 6 | 0.5 |

10 ITEM LIST

12

13

KNAPSACK #1 (WEIGHT LIMIT: 13)
- ITEM #4
- ITEM #1
- ITEM #3
- ITEM #9

KNAPSACK #2 (WEIGHT LIMIT: 15)
- ITEM #5
- ITEM #2
- REPLICA OF ITEM #4

KNAPSACK #3 (WEIGHT LIMIT: 11)
- ITEM #7
- REPLICA OF ITEM #5

EP 3 872 647 A1

# FIG.8

10 ITEM LIST

| | PACKED | WORTH | WEIGHT | EVALUATION VALUE |
|---|---|---|---|---|
| ITEM #1 | ✔ | 5 | 3 | 1.666667 |
| ITEM #2 | ✔ | 7 | 5 | 1.4 |
| ITEM #3 | ✔ | 6 | 3 | 2 |
| ITEM #4 | | 6 | 4 | 1.5 |
| ITEM #5 | | 4 | 5 | 0.8 |
| ITEM #6 | | 1 | 4 | 0.25 |
| ITEM #7 | | 3 | 6 | 0.5 |
| ITEM #8 | | 7 | 10 | 0.7 |
| ITEM #9 | ✔ | 7 | 2 | 3.5 |

ITEM #1
ITEM #3
ITEM #9

KNAPSACK #1
(WEIGHT LIMIT: 13)

ITEM #2

KNAPSACK #2
(WEIGHT LIMIT: 15)

KNAPSACK #3
(WEIGHT LIMIT: 11)

# FIG.9

## FIG.10

DATA ACQUISITION UNIT — 31

EVALUATION VALUE CALCULATING UNIT — 32

ALLOCATION UNIT — 33

REPLICA SELECTING UNIT — 34

REPLICA CREATING UNIT — 35

ALLOCATION FINALIZING UNIT — 36

METAHEURISTIC CALCULATION UNIT — 37

DATA OUTPUT UNIT — 38

30

ITEM DB (INCLUSIVE OF REPLICAS) — 30A

KNAPSACK DB — 30B

EP 3 872 647 A1

EP 3 872 647 A1

FIG.11

START

READ INPUT DATA
(ITEM DATA, KNAPSACK DATA) — S1

knapsackList ← CREATE LIST OF KNAPSACK
DATA
itemList ← CALCULATE EVALUATION VALUES
OF ALL ITEMS, AND SORT ITEMS — S2

YES ← IS knapsackList EMPTY? — S3

NO

knapsack ← REMOVE TOP ITEM
FROM knapsackList — S4

YES ← IS itemList EMPTY? — S5

NO

item ← REFER TO TOP ITEM IN itemList — S6

IS
WEIGHT LIMIT
VIOLATED BY ALLOCATING
item TO knapsack
? — S7

YES

NO

ALLOCATE item TO knapsack — S8

REMOVE item FROM itemList — S9

REMOVE ALL REPLICAS, AND RETURN
ORIGINAL ITEMS OF REPLICAS
TO itemList — S12

CREATE REPLICA WITH RESPECT TO ITEM
HAVING LOW DEGREE OF CERTAINTY
AMONG items ALLOCATED TO knapsack,
AND ADD REPLICA TO itemList — S10

EXECUTE ISING MACHINE WITH
RESPECT TO ITEMS IN itemList — S13

itemList ← CALCULATE EVALUATION
VALUES OF ITEMS IN itemList, AND SORT ITEMS — S11

PRESENT SOLUTION TO USER — S14

END

## FIG.12

```
                    START
                      │
                      ▼                              S21
┌──────────────────────────────────────────────┐
│  READ INPUT DATA (ITEM DATA, KNAPSACK DATA)    │
└──────────────────────────────────────────────┘
                      │                              S22
                      ▼
┌──────────────────────────────────────────────┐
│              threshold ← 0                      │
└──────────────────────────────────────────────┘
                      │                              S23
                      ▼
┌──────────────────────────────────────────────┐
│ knapsackList ← CREATE LIST OF KNAPSACK DATA     │
│ itemList ← CALCULATE EVALUATION VALUES OF       │
│          ALL ITEMS, AND SORT ITEMS              │
└──────────────────────────────────────────────┘
```

START

S21 — READ INPUT DATA (ITEM DATA, KNAPSACK DATA)

S22 — threshold ← 0

S23 — knapsackList ← CREATE LIST OF KNAPSACK DATA
itemList ← CALCULATE EVALUATION VALUES OF ALL ITEMS, AND SORT ITEMS

S24 — IS knapsackList EMPTY? — YES / NO

S25 — knapsack ← REMOVE TOP ITEM FROM knapsackList

S26 — IS itemList EMPTY? — YES / NO

S27 — item ← REFER TO TOP ITEM IN itemList

S28 — IS WEIGHT LIMIT VIOLATED BY ALLOCATING item TO knapsack? — YES / NO

S29 — ALLOCATE item TO knapsack

S30 — REMOVE item FROM itemList

S31 — CREATE REPLICAS WITH RESPECT TO LAST ITEMS EQUAL IN NUMBER TO threshold AMONG items ALLOCATED TO knapsack, AND ADD REPLICAS TO itemList

S32 — itemList ← CALCULATE EVALUATION VALUES OF ITEMS IN itemList, AND SORT ITEMS

S33 — REMOVE ALL REPLICAS, AND RETURN ORIGINAL ITEMS OF REPLICAS TO itemList

S34 — EXECUTE ISING MACHINE WITH RESPECT TO ITEMS IN itemList

S35 — threshold ← threshold + 1

S36 — threshold > N ? — NO / YES

S37 — PRESENT BEST SOLUTION TO USER

END

EP 3 872 647 A1

# FIG.13

● TASK DATA

| | WORTH [YEN] | TIME NEEDED [MINUTE] | EVALUATION VALUE |
|---|---|---|---|
| TASK #1 | 1075 | 45 | 23.8888889 |
| TASK #2 | 558 | 25 | 22.32 |
| TASK #3 | 1136 | 67 | 16.9552239 |
| TASK #4 | 378 | 18 | 21 |
| TASK #5 | 2308 | 123 | 18.7642276 |
| TASK #6 | 1624 | 97 | 16.742268 |
| TASK #7 | 3286 | 174 | 18.8850575 |
| TASK #8 | 2583 | 158 | 16.3481013 |
| TASK #9 | 4066 | 177 | 22.9717514 |

40

● WORKER DATA

| | WORK TIME [MINUTE] |
|---|---|
| WORKER #1 | 300 |
| WORKER #2 | 220 |
| WORKER #3 | 260 |

41

Europäisches
Patentamt

European
Patent Office

Office européen
des brevets

# EUROPEAN SEARCH REPORT

Application Number

EP 21 15 3883

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | THANASIS LOUKOPOULOS ET AL: "Implementing Replica Placements: Feasibility and Cost Minimization", PARALLEL AND DISTRIBUTED PROCESSING SYMPOSIUM, 2007. IPDPS 2007. IEEE INTERNATIONAL, IEEE, PI, 1 March 2007 (2007-03-01), pages 1-10, XP031175371, ISBN: 978-1-4244-0909-9 * abstract * * paragraphs [03.2], [03.4] * * paragraphs [0004], [04.1] * * paragraph [04.2] * * paragraphs [0005], [05.1] * | 1-8 | INV. G06F16/27 G06Q10/06 |
| Y | EP 3 173 984 A1 (SERVICEPOWER BUSINESS SOLUTIONS LTD [GB]) 31 May 2017 (2017-05-31) * abstract * * paragraph [0026] - paragraph [0027] * | 1-8 | |
| Y | US 2012/215576 A1 (JENSEN DAVID L [US] ET AL) 23 August 2012 (2012-08-23) * abstract; figure 1 * * paragraph [0015] - paragraph [0016] * * paragraph [0045] - paragraph [0047] * | 1-8 | TECHNICAL FIELDS SEARCHED (IPC) G06F G06Q |
| A | TENZAKHTI F ET AL: "Replication algorithms for the World-Wide Web", JOURNAL OF SYSTEMS ARCHITECTURE, ELSEVIER BV, NL, vol. 50, no. 10, 1 October 2004 (2004-10-01), pages 591-605, XP004558645, ISSN: 1383-7621, DOI: 10.1016/J.SYSARC.2003.12.003 * paragraph [04.2] * | 1-8 | |

The present search report has been drawn up for all claims

| Place of search | Date of completion of the search | Examiner |
|---|---|---|
| Berlin | 15 June 2021 | Nazzaro, Antonio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 3 872 647 A1**

## ANNEX TO THE EUROPEAN SEARCH REPORT
## ON EUROPEAN PATENT APPLICATION NO.

EP 21 15 3883

This annex lists the patent family members relating to the patent documents cited in the above-mentioned European search report.
The members are as contained in the European Patent Office EDP file on
The European Patent Office is in no way liable for these particulars which are merely given for the purpose of information.

15-06-2021

| Patent document cited in search report | | Publication date | Patent family member(s) | Publication date |
|---|---|---|---|---|
| EP 3173984 | A1 | 31-05-2017 | NONE | |
| US 2012215576 | A1 | 23-08-2012 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019046031 A
- JP 2011100303 A